Europäisches Patentamt

European Patent Office

Office européen des brevets

(19)

(11) Veröffentlichungsnummer: **0 224 166 B1**

(12) **EUROPÄISCHE PATENTSCHRIFT**

(45) Veröffentlichungstag der Patentschrift: **29.05.91**

(51) Int. Cl.⁵: **A01M 7/00**

(21) Anmeldenummer: **86115921.8**

(22) Anmeldetag: **17.11.86**

(54) Landwirtschaftliche Feldspritze mit einem Spritzgestänge.

(30) Priorität: **21.11.85 DE 3541130**

(43) Veröffentlichungstag der Anmeldung:
**03.06.87 Patentblatt 87/23**

(45) Bekanntmachung des Hinweises auf die
Patenterteilung:
**29.05.91 Patentblatt 91/22**

(84) Benannte Vertragsstaaten:
**BE DE FR GB NL**

(56) Entgegenhaltungen:
**DE-B- 3 025 175       DE-U- 1 859 848**
**FR-A- 1 455 965       FR-A- 2 450 035**
**FR-A- 2 460 438       FR-A- 2 505 681**
**FR-A- 2 560 533       US-A- 3 055 594**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Oberheide, Friedrich
Kiefernweg 15
W-4507 Hasbergen(DE)**

## Beschreibung

Die Erfindung betrifft eine landwirtschaftliche Feldspritze mit einem Spritzgestänge gemäß des Oberbegriffes des Patentanspruches 1.

Eine derartige landwirtschaftliche Feldspritze ist beispielsweise bereits durch die deutsche Patentschrift DE-C-31 19 093 bekannt. Das Spritzgestänge dieser landwirtschaftlichen Feldspritze ist pro Auslegerseite in mehrere Abschnitte unterteilt, die mittels Gelenke, die in ihren Schwenkachsen aufrecht verlaufen, miteinander verbunden sind und in eine gestreckte sowie eine zusammengefaltete Stellung zu bringen sind, wobei die einzelnen Teile über eine Fernbedienungsvorrichtung aus ihrer Arbeitsstellung in ihre Transportstellung und umgekehrt bringbar sind. Während der Bewegung von der Arbeitsstellung in die Transportstellung des Spritzgestänges oder umgekehrt nehmen die einzelnen Teile des Spritzgestänges zueinander zwangsweise eine zick-zack-förmige Stellung ein. Sobald das Spritzgestänge eingeklappt wird bzw. ausgeklappt werden soll, werden gleichzeitig alle Abschnitte über die Fernbedienungsvorrichtung bewegt. Hierbei ist es nachteilig, daß nur eine Arbeitsbreite bzw. Spritzbreite für dieses Spritzgestänge vorgesehen ist. Es ist beispielsweise nicht möglich, wenn am Feldrand ein schmalerer Streifen als die Breite des Spritzgestänges bespritzt werden soll, und so einzelne Abschnitte der Spritzdüsen, die in dem Spritzgestänge angeordnet sind, abgeschaltet werden, die Teile, an denen sich die abgeschalteten Düsen des Spritzgestänges befinden, einzuklappen, so daß das Spritzgestänge über den Feldrand hinausragt. Dieses ist vor allem dann von Bedeutung, wenn der Feldrand sich unmittelbar an einer Straße bzw. an einer Weide mit einem die Weise umgebenen Zaun befindet.

Dieses ist vor allem dann von Bedeutung, wenn auf jeder Seite der Feldspritze das Spritzgestänge in zumindest drei Abschnitte unterteilt ist, so daß man in möglichst kleinen Abschnitten des Spritzgestänges die Arbeitsbreite des Spritzgestänges verringern kann und auch möchte.

Durch das deutsche Gebrauchsmuster DE-U-18 59 848 ist ein Spritzgestänge, welches jeweils aus zwei zueinander einklappbaren Abschnitten besteht, die mittels eines Gelenkes miteinander verbunden sind, bekannt. Über eine Seilsteuerung ist dieses Spritzgestänge in eine zusammengefaltete und in eine gestreckte Lage zu bringen. Diese bekannte Seilsteuerung ist jedoch nicht geeignet, ein Spritzgestänge mit mehr als jeweils zwei Abschnitten zueinander einzuklappen.

Der Erfindung liegt die Aufgabe zugrunde, eine möglichst einfache Vorrichtung für das Einklappen eines Spritzgestänges zu schaffen, wobei es auf einfache Weise möglich sein soll, daß durch die Fernbedienungsvorrichtung das Spritzgestänge abschnittsweise von außen nach innen, wobei die sich weiter innen anschließenden Abschnitte in ihrer gestreckten Lage zu nächst jeweils verbleiben sollen, einklappbar sein soll.

Diese Aufgabe wird erfindungsgemäß durch die kennzeichnenden Maßnahmen des Anspruches 1 gelöst.

Infolge dieser Maßnahmen ist es in einfachster Weise möglich, die Fernbedienungsvorrichtung ohne großen konstruktiven Aufwand so auszubilden, daß die einzelnen Abschnitte des Spritzgestänges von außen nach innen jeweils einzeln hintereinander einklappen, wobei die sich jeweils weiter innen befindlichen Abschnitte zunächst noch in ihrer gestreckte Lage verbleiben. Weiterhin wird beim Ausklappen jeweils zunächst der innere Abschnitt ausgeklappt, während die sich anschließenden Abschnitte zunächst noch in ihrer eingeklappten Stellung verbleiben und dann nach und nach hintereinander in ihre Arbeitsstellung geklappt werden. Dadurch ist erfindungsgemäß vorgesehen, daß das Seil der Seilsteuerung jeweils nur an dem äußersten Abschnitt des Spritzgestänges und an einem am Rahmen der Feldspritze angeordneten Seilzugelement befestigt ist, ergibt sich eine äußerst einfache Seilführung, die es in überraschend und verblüffend einfacher Weise ermöglicht, die einzelnen Abschnitte nacheinander aus- bzw. einzuklappen.

Außerdem sind zwischen den einzelnen Abschnitten im Bereich der jeweiligen Gelenke Seilführungselemente angeordnet, die das Seil in einem Abstand von der Schwenkachse der Gelenke halten. Somit werden in überraschend einfacher Weise die erforderlichen Hebelverhältnisse geschaffen, um das Spritzgestänge in der erfindungsgemäßen Weise einklappen zu können.

Weiterhin ist erfindungsgemäß vorgesehen, daß die Gelenkachsen der inneren Gelenke, mit denen die innersten Abschnitte des Spritzgestänges an dem Rahmen der Feldspritze angelenkt sind, jeweils etwa in Fahrtrichtung verlaufen. Infolge dieser Maßnahmen wird ein äußerst kompakt zusammenfaltbares Spritzgestänge, welches in der zusammengefalteten Stellung wenig Raum beansprucht, sowie ein in eine Lage in der alle in dem Spritzgestänge angeordneten Spritzdüsen nach unten weisen, zu bringendes Spritzgestänge geschaffen. Des weiteren ergibt sich durch diese Maßnahme, daß die die seitlich die Feldspritze erheblich überragenden Teile des Spritzgestänges zu einem kompakten Paket zusammengefaltet werden. Diese kompakt zusammengefaltete Paket kann dann um das innerste Gelenk, dessen Schwenkachse in Fahrtrichtung verläuft, hochgeklappt und in eine aufrechten Stellung hinter dem Tank der Feldspritze gebracht werden In dieser Transportstellung ist der Tank der Feldspritze von der Seite her sehr bequem und ohne Störung irgendwelcher Gestängeteile direkt zugänglich. Weiterhin können die zusammengefalteten Pakete in eine waagerechte Stellung gebracht werden, in der die Spritzmittelleitungen und die Düsen, die in dem Spritzgestänge untergebracht sind, bequem gereinigt werden, ohne daß das Spritzgestänge in seine gestreckte Lage gebracht werden muß. Dieses ist vor allem bei Spritzgestängen für große Arbeitsbreiten, die in sehr viele kleine Abschnitte unterteilt sind, von sehr großem Vorteil. Weiterhin befindet sich das zusammengefaltete und hochgeklappte Spritzgestänge hinter dem Tank der Feldspritze in einem geschützten Bereich. Somit kann das sich in der Transportstellung befindliche Spritzgestänge während des Transportes nicht beschädigt werden, da es die Spritze seitlich nicht überragt.

Hierbei ist es dann in erfindungsgemäßer Weise vorgesehen, daß für jede Seite des Spritzgestänges zwei Seile vorgesehen sind, wobei durch Ziehen an dem einem Seil das Spritzgestänge ausklappbar ist. Hierdurch ergibt sich eine äußerst einfache Ausbildung der Seilsteuerung.

Um das Spritzgestänge mit dem einen Seil um die äußeren aufrechten Achsen und gleichzeitig um das innerste in Fahrtrichtung verlaufende Gelenk mit derselben Seilführung und demselben ununterbrochenen Seilen aus der Arbeits- in die Transportstellung und umgekehrt klappen zu können, ist erfindungsgemäß vorgesehen, daß jeweils das innerste Teil des Spritzgestänges oberhalb des etwa in Fahrtrichtung verlaufenden Gelenkes einen über das Gelenk nach oben überstehenden Arm aufweist, und daß das Einklappseil über diesen Arm geführt ist.

Des weiteren ist erfindungsgemäß vorgesehen, daß die Einklappseile und die Ausklappseile jeweils gegenläufig zueinander wirksam sind. Hierdurch ist es möglich, eine äußerst einfache Betätigungsvorrichtung für die Seilsteuerung zu schaffen, In einer erfindungsgemäßen Ausführung ist vorgesehen, daß die Einklappseile sowie die Ausklappseile für die beiden Spritzgestängeseiten jeweils miteinander verbunden sind. Hierdurch ist es in einfachster Weise möglich, für das Einklappen bzw. das Ausklappen beider Seiten eine Betätigungsvorrichtung zu verwenden. Somit ist es möglich, daß beide Seiten gleichzeitig eingeklappt werden können. Es ist jedoch auch möglich, wenn man einzelne Abschnitte miteinander starr verriegelt bzw. das Einklapp- bzw. das Ausklappseil für die eine Seite des Spritzgestänges festhält bzw. festklemmt, so daß dann nur eine Seite eingeklappt bzw. ausgeklappt bzw. in Abschnitten ein- und ausgeklappt wird.

Um in einfachster Weise die Seilführung so auszubilden, daß die einzelnen Abschnitte des Spritzgestänges von außen nach innen nacheinander einklappen bzw. die einzelnen Abschnitte von innen nach außen nacheinander ausklappen, ist erfindungsgemäß vorgesehen, daß die Ausklappmomente von innen nach außen aufbaubar sind, während die Einklappmomente von außen nach innen aufbaubar sind. In einer bevorzugten Ausführung ist hierbei vorgesehen, daß beim Einklappen durch das Ausklappseil eine Gegenkraft gegen die Kraft des Einklappseiles aufbringbar ist, und daß beim Ausklappen durch das Einklappseil eine Gegenkraft gegen die Kraft des Ausklappseiles aufbringbar ist. Infolge dieser Maßnahmen wird erreicht, daß das Seil lediglich an dem äußersten Abschnitt befestigt werden muß, während es mit den übrigen Abschnitten des Spritzgestänges nicht kraftschlüssig, d.h. weder form- noch reibschlüssig verbunden zu sein braucht. Hierdurch ergibt sich dann eine verblüffend einfache konstruktive Ausbildung der erfindungsgemäßen Seilsteuerung.

Weiterhin ist erfindungsgemäß vorgesehen, daß zwischen dem inneren Abschnitt des Spritzgestänges die Seile jeweils flaschenzugartig angeordnet sind, während die Seile zwischen den äußeren Abschnitten im wesentlichen über unterschiedliche Hebelarme umgelenkt sind. Durch die flaschenzugartige Umlenkung der Seile zwischen den inneren Abschnitten ergibt sich eine äußerst kompakte Bauweise der Seilführung.

Des weiteren ist erfindungsgemäß vorgesehen, daß in dem Einklappseil im Bereich der äußeren Abschnitte eine Zugfeder angeordnet ist. Infolge dieser Maßnahme wird in äußerst einfacher Weise eine Ausweichmöglichkeit, vor allem des äußeren Abschnittes erreicht, wenn das Spritzgestänge im äußeren Abschnitt gegen ein Hindernis stößt. Infolge der durch die Zugfeder geschaffenen elastischen Ausweichmöglichkeit kann das Spritzgestänge nach hinten im äußeren Bereich ausweichen und so, ohne daß das Spritzgestänge beschädigt wird, an dem Hindernis vorbeigleiten. Nach dem Passieren des Hindernisses zieht die Zugfeder den äußeren Abschnitt des Spritzgestänges wieder in seine gestreckte Lage.

Weitere Einzelheiten der Erfindung sind den übrigen Unteransprüchen, der Beispielsbeschreibung sowie den Zeichnungen zu entnehmen. Hierbei zeigen

Fig. 1    das erfindungsgemäße Spritzgestänge in seiner Spritzstellung in Prinzipdarstellung und in der Ansicht von hinten,

Fig. 2    das Spritzgestänge gemäß Fig. 1 in der Ansicht von oben,

Fig. 3    das Spritzgestänge teilweise zusammengeklappt in Prinzipdarstellung und in der Ansicht von oben und

Fig. 4    das Spritzgestänge in Transportstellung, in Prinzipdarstellung und in der Ansicht von hinten.

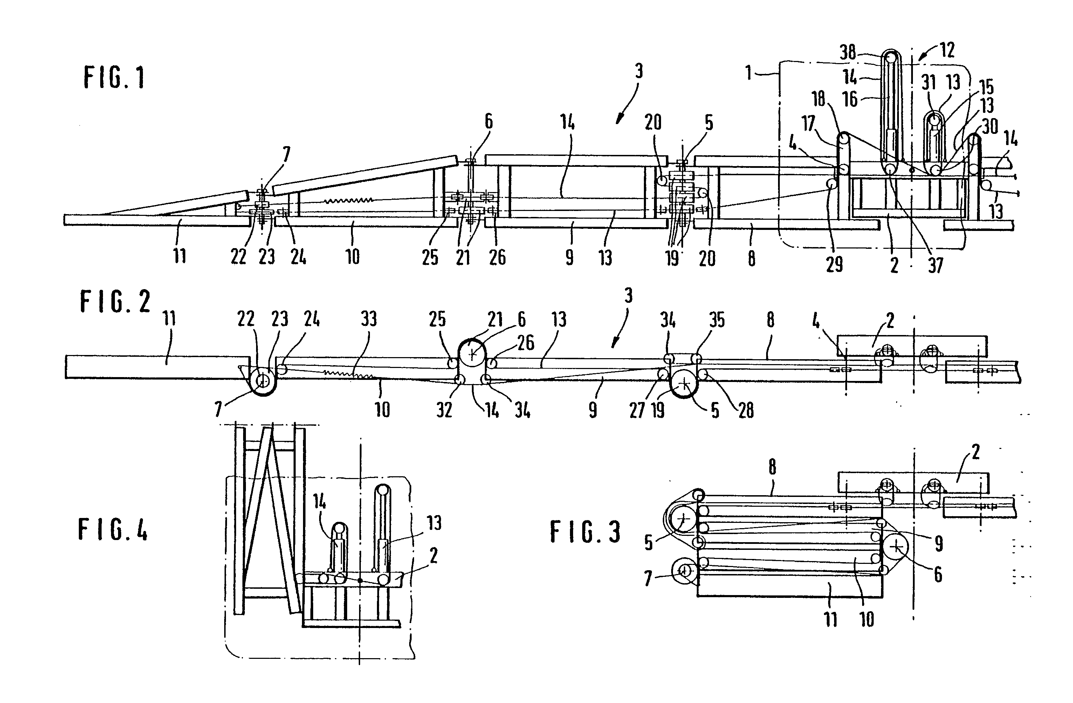

Die Feldspritze weist den mit strichpunktierten Linien dargestellten Tank 1 mit einer Einfüllöffnung sowie einem nicht dargestellten Rahmen auf. Auf der Rückseite der Feldspritze ist an dem Rahmen der Feldspritze der Tragrahmen 2 des Spritzgestänges 3 in Höhenrichtung verstellbar und pendelnd in bekannter und daher nicht näher dargestellter Weise angeordnet. Das Spritzgestänge 3 ist in mehrere Abschnitte unterteilt, die mittels der Gelenke 4, 5, 6 und 7 miteinander verbunden sind. Der innerste Abschnitt 8 des Spritzgestänges 3 ist an dem Tragrahmen 2 mit dem Gelenk 4 angeordnet, dessen Schwenkachse etwa in Fahrtrichtung der Feldspritze verläuft. Die an den innersten Abschnitt 8 sich anschließenden Abschnitte 9, 10 und 11 des Spritzgestänges 3 sind jeweils um aufrechte Achsen verschwenkbar. Das in den Fig. 1 und 2 dargestellte Spritzgestänge 3 befindet sich in seiner gestreckten Lage, die der Arbeitsstellung entspricht.

Mittels der Gelenke 4, 5, 6 und 7 ist das Spritzgestänge 3 in eine zusammengefaltete Lage, über die in Fig. 3 dargestellte Stellung in die in Fig. 4 dargestellte zusammengefaltet Stellung, die der Transportstellung entspricht, zu bringen. Dieses geschieht über eine als Seilsteuerung ausgebildete Fernbedienungsvorrichtung.

Die als Seilsteuerung 12 ausgebildete Fernbedienungsvorrichtung weist das Einklappseil 13 und das Ausklappseil 14 auf. Das Einklappseil 13 und das Einklappseil 14 sind jeweils in einem Abstand von dem Gelenk 7 an dem äußersten Abschnitt 11 des Spritzgestänges 3 befestigt. Außerdem sind das Einklappseil 13 und das Ausklappseil 14 am Tragrahmen 2 befestigt. Es wäre jedoch auch möglich, daß das jeweilige Einklappseil 13 bzw. das jeweilige Ausklappseil 14 der beiden Seiten des Spritzgestänges 3 jeweils miteinander verbunden sind. Weiterhin sind am Tragrahmen 2 die als Einklappzylinder 15 und Ausklappzylinder 16 ausgebildeten Bedienungsvorrichtungen der Seilsteuerung 12 angeordnet. Der Einklappzylinder 15 und der Ausklappzylinder 16 sind als einfach wirkende Hydraulikzylinder ausgebildet.

Zwischen den einzelnen Anschnitten 8, 9, 10 und 11 des Spritzgestänges 3 sind Seilführungselemente angeordnet, die die Seile 13 und 14 in einem Abstand von der Schwenkachse der jeweilige Gelenke 4, 5, 6 und 7 halten. An dem innersten Teil 8 des Spritzgestänges 3 ist oberhalb des Gelenkes 4 der über das Gelenk 4 nach oben überstehende Arm 17 angeordnet. Dieser Arm 17 weist an seinem oberen Ende das als Seilrolle 18 ausgebildete Seilführungselement auf. Diese Seilrolle 18 ist frei drehbar an dem Arm 17 gelagert. Zwischen den Abschnitten 8 und 9 sind in dem Gelenk 5 die als Seilrollen 19 ausgebildeten Seilführungselemente angeordnet, die auf dem Gelenkbolzen des Gelenkes 5 frei drehbar gelagert sind. Weiterhin sind an den Abschnitten 8 und 9 des Spritzgestänges 3 im Bereich des Gelenkes 5 die beiden kleinen Seilrollen 20 zur Umlenkung des Ausklappseiles 16 angeordnet. Auch diese Seilrollen 20 sind frei drehbar angeordnet. Zwischen den Abschnitten 9 und 10 sind die beiden als Seilrollen 21 ausgebildeten Seilführungselement auf dem Gelenkbolzen des Gelenkes 6 frei drehbar angeordnet. Zwischen den einzelnen Abschnitten 10 und 11 sind die als Seilrollen 22 und 23 ausgebildeten Seilführungselemente frei drehbar auf dem Gelenkbolzen des Gelenkes 7 angeordnet.

Das Einklappseil 13 ist an dem äußersten Abschnitt 11 des Spritzgestänges 3 befestigt. Das Einklappseil 13 ist dann um die große Seilrolle 23, die auf dem Gelenkbolzen des Gelenkes 7 gelagert ist, herumgeführt. Anschließend ist das Einklappseil 13 um die kleine Seilrolle 24, die frei drehbar im äußeren Bereich des Abschnittes 10 angeordnet ist, herumgeführt. Anschließend ist das Einklappseil 13 um die kleine Seilrolle 25, die im inneren Bereich des Abschnittes 10 des Spritzgestänges 3 frei drehbar gelagert ist, herumgeführt. Anschließend ist das Einklappseil 13 um die untere Rolle 21 herumgeführt. Anschließend wird das Einklappseil 13 durch die Seilrolle 26, die im äußeren Bereich an dem Abschnitt 9 frei drehbar gelagert ist, herumgeführt. Anschließend wird das Einklappseil 13 um die freidrehbar an dem inneren Bereich des Abschnittes 9 gelagerten Rolle 27 herumgeführt, bevor es um die Rolle 19 und die an dem inneren Bereich des Abschnittes 8 freidrehbar angeordneten Seilrolle 28 herumgeführt wird. Anschließend wird das Einklappseil 13 um die in der Nähe des Gelenkes 4 angeordneten und frei drehbar gelagerten Rolle 29 herumgeführt, bevor das Einklappseil 13 über die Seilrolle 18 herumgeführt wird. Anschließend wird das Einklappseil 13 um die an dem Tragrahmen 2 angeordneten Seilrolle 30 umgelenkt. Nach der Seilrolle 30 wird das Einklappseil 13 über die an dem Einklappzylinder 15 angeordneten Umlenkrolle 31 herumgeführt und an dem Tragrahmen 2 befestigt.

Das Ausklappseil 13 ist in einem Abstand von dem Gelenk 7 an dem äußeren Abschnitt 11 befestigt. Während des Einklappens des Gestänges legt das Ausklappseil 14 sich um die kleine Seilrolle 22. Bevor das Ausklappseil 14 über die im inneren Bereich des Abschnittes 10 frei drehbar gelagerte Seilrolle 32 ist in dem Ausklappseil 14 die Zugfeder 33 angeordnet. Weiterhin ist das Ausklappseil 14 über die in dem äußeren Bereich des Abschnittes 9 angeordnete Seilrolle 34 geführt. Wenn das Spritzgestänge 3 eingeklappt wird, legt das Ausklappseil 14 sich in dem Bereich des Gelenkes 6 um die untere Seilrolle 21, die auf dem Gelenkbolzen des Gelenkes 6 angeordnet ist. Des weiteren ist das Ausklappseil 14 falschenzugartig über die Seilrollen 35 und 36 geführt. Die Seilrolle 34 ist in dem inneren Bereich des Abschnittes 9 angeordnet, während die Seilrolle 35 in dem äußeren Bereich des Abschnittes 8 frei drehbar gelagert ist. Während des Einklappens des Spritzgestänges 3 legt sich das Einklappseil 14, welches flaschenzugartig über die Rollen 34 und 35 geführt ist, um die oberen drei Seilrollen 19, die auf dem Gelenkbolzen des Gelenkes 5 angeordnet sind. Weiterhin ist das Einklappseil 14 um die Seilrolle 37, die an dem Tragrahmen 2 frei drehbar gelagert ist geführt. Weiterhin ist das Ausklappseil 14 um die an dem Ausklappzylinder 16 drehbar gelagerte Seilrolle 38 herumgeführt und mit seinem Ende an dem Tragrahmen 2 befestigt.

Das Einklappseil 13 befindet sich jeweils auf der Seite des jeweiligen Gelenkes 5, 6 und 7 zu der die einander benachbarten Abschnitte 8, 9, 10 und 11 aneinander heranklappbar sind, während sich das Ausklappseil 14 jeweils sich auf der anderen Seite der Gelenke 5, 6, und 7 befindet. Durch diese Anordnung sind die Einklappseile 13 und die Ausklappseile 14 jeweils gegenläufig zueinander wirksam. Durch die unterschiedlich großen Rollen 22, 23, 21 sowie der flaschenzugartigen Seilumlenkung im Bereich des Gelenkes 5 sind die Ausklappmomente von innen nach außen aufbaubar, während die Einklappmomente von außen nach innen aufbaubar sind. Da die Einklappseile 13 und die Ausklappseile 14 gegenläufig wirksam sind, sowie an ihrem jeweiligen Ende an dem äußersten Abschnitt 11 befestigt sind, wird durch das Aus-Klappseil 14 eine Gegenkraft gegen die Kraft des Einklappseiles 13 beim Einklappen des Gestänges 3 aufgebracht. Diese Gegenkraft rührt daher, daß in der Hydraulikleitung zu dem Ausklappzylinder 16 ein Drosselventil angeordnet ist und beim Einklappen des Spritzgestänges 3 über das Ausklappseil 14 der Ausklappzylinder 16 zusammengedrückt wird, indem über den Einklappzylinder 15 und das Einklappseil 13 das Spritzgestänge 3 zusammengeklappt wird.

Das Einklappen bzw. das Ausklappen des Spritzgestänges geschieht folgendermaßen:

Wenn das Spritzgestänges 3 gemäß Fig. 1 sich in der Spritzstellung befindet und in die Transportstellung gebracht werden soll, wird über einen hydraulischen Bedienungshebel der mit der Schlepperhydraulikanlage verbundene Einklappzylinder 13 ausgefahren. Durch das Ausfahren des Einklappzylinders 13 wird das Einklappseil im Bereich des Spritzgestänges 3 verkürzt. Zunächst werden beim Einklappen die Abschnitte 11 um 180° nach hinten an den Abschnitt 10 des Verteilergestänges 3 herangeklappt. Wenn jeweils der Abschnitt 11 an den jeweiligen Abschnitt 10 herangeklappt ist, werden die Abschnitte 10 und 11 gemeinsam nach vorn um 108° an den Abschnitt 9 des Spritzgestänges 3 herangeklappt. Wenn der Abschnitt 10 mit dem Abschnitt 11 an dem Abschnitt 9 des Spritzgestänges 3 anliegt, werden die Abschnitte 9, 10 und 11 gemeinsam um das Gelenk 9 nach hinten an den Abschnitt 8 des Spritzgestänges 3 herangeklappt. Wenn nun der Abschnitt 9 an dem Abschnitt 8 des Spritzgestänges 3 zur Anlage kommt, und so die Abschnitte 8, 9, 10 und 11 ein kompaktes Paket, wie in Fig. 3 dargestellt, bilden, wird dieses Paket der Abschnitte 8, 9, 10 und 11 aus der in Fig. 3 dargestellten Position in die in Fig. 4 dargestellte Position geklappt. Hierbei sind die Einklappseile 13 und die Ausklappseile 14 so geführt, daß gleichzeitig die beiden seitlich der Feldspritze gelegenen Abschnitte des Spritzgestänges 3 gleichzeitig zusammengefaltet werden.

Soll das Spritzgestänge aus der in Fig. 4 dargestellten Transportstellung in die in Fig. 1 dargestellte Arbeitsstellung gebracht werden, so wird über ein Hydraulikventil der mit der Schlepperhydraulikanlage verbundene Ausklappzylinder 14 mit Druck beaufschlagt. Durch das Ausfahren des Ausklappzylinders 16 wird an dem Ausklappseil 14 gezogen. Gleichzeitig wird über dem Ausleger 11, an dem gemeinsam das Ein- und das Ausklappseil befestigt sind, an dem Einklappseil 13 gezogen, so daß der Einklappzylinder 15 zusammengedrückt wird. Durch das Ausfahren des Ausklappzylinders 16 wird das Spritzgestänge 3 zunächst in die in Fig. 3 dargestellte Position um die durch das Gelenk 4 verlaufende Schwenkachse geschwenkt. Anschließend schwenken die Abschnitte 9, 10 und 11 des Spritzgestänges um das Gelenk 5 um 180° in eine Stellung, die in Verlängerung des Abschnittes 8 des Spritzgestänges 3 liegt. Wenn der Abschnitt 9 in Verlängerung des Abschnittes 8 liegt, klappen die Abschnitte 10 und 11 um das Gelenk 6 um 180° in eine Stellung, die in Verlängerung der Abschnitte 8 und 9 des Spritzgestänges liegt. Anschließend klappt der Abschnitt 11 um das Gelenk 7 in die in Fig. 2 dargestellte Position. Somit befindet sich das Spritzgestänge 3 in der Arbeitsstellung.

**Ansprüche**

1. Landwirtschaftliche Feldspritze mit einem Spritzgestänge (3), welches pro Auslegerseite in zumindest drei Abschnitte (8,9,10,11) unterteilt ist, die mittels Gelenke (4,5,6,7), deren Schwenkachsen aufrecht verlaufen, miteinander verbunden und in eine gestreckte Lage (Arbeitsstellung) sowie eine zusammengefaltete Stellung (Transportstellung) bringbar sind, wobei die einzelnen Teile (8,9,10,11) über eine Fernbedienungsvorrichtung (12) aus ihrer Arbeitsstellung in ihre Transportstellung und umgekehrt bringbar sind, dadurch gekennzeichnet, daß die Fernbedienungsvorrichtung als Seilsteuerung (12) ausgebildet ist, daß das Seil (13,14) der Seilsteuerung (12) jeweils nur an dem äußersten Abschnitt (11) des Spritzgestänges (3) und an einem am Rahmen (2) der Feldspritze angeordneten Seilzugelement (15,16) befestigt ist, und daß zwischen den einzelnen Abschnitten im Bereich der jeweiligen Gelenke (4,5,6,7) Seilführungselemente (18,19, 20,21,22,23,24,25,26,27,28,29,30,32,34,35,36,37) angeordnet sind, die das Seil (13,14) in einem Abstand von der Schwenkachse der Gelenke (4,5,6,7) halten.

2. Feldspritze nach Anspruch 1, dadurch gekennzeichnet, daß die Gelenkachse der inneren Gelenke (4), mit denen die innersten Abschnitte (8) des Spritzgestänges (3) an dem Rahmen der Feldspritze angelenkt sind, etwa in Fahrtrichtung jeweils verlaufen.

3. Feldspritze nach Anspruch 2, wobei das Spritzgestänge zick-zackförmig ein- bzw. ausklappbar ist, dadurch gekennzeichnet, daß für jede Seite des Spritzgestänges (3) zwei Seile (13,14) vorgesehen sind, wobei durch Ziehen an dem einen Seil, dem Einklappseil (13), das Spritzgestänge einklappbar und durch Ziehen an dem anderen Seil, dem Ausklappseil (14), das Spritzgestänge (3) ausklappbar ist.

4. Feldspritze nach Anspruch 3, dadurch gekennzeichnet, daß die beiden Seile jeweils derart angeordnet sind, daß das Einklappseil (13) jeweils auf der Seite des jeweiligen Gelenkes (5,6,7) sich befindet, zu der die einander benachbarten Abschnitte (8,9,10,11) aneinander heranklappbar sind, während sich das Ausklappseil (14) jeweils sich auf der anderen Seite des jeweiligen Gelenkes (8,9,10,11) befindet.

5. Feldspritze nach Anspruch 2 und 4, dadurch gekennzeichnet, daß das innerste Teil (8) oberhalb des etwa in Fahrtrichtung verlaufenden Gelenkes (4) einen über das Gelenk nach oben überstehenden Arm (17) aufweist, und daß das Einklappseil (13) über diesen Arm (17) geführt ist.

6. Feldspritze nach Anspruch 1, dadurch gekennzeichnet, daß die Bedienungsvorrichtung für die Seilsteuerung als Hydraulikzylinder (15,16) ausgebildet sind.

7. Feldspritze nach Anspruch 1, dadurch gekennzeichnet, daß die Bedienungsvorrichtung für die Seilsteuerung als Seilwinde ausgebildet ist.

8. Feldspritze nach Anspruch 3, dadurch gekennzeichnet, daß die Einklappseile (13) und die Ausklappseile (14) jeweils gegenläufig zueinander wirksam sind.

9. Feldspritze nach Anspruch 3, dadurch gekennzeichnet, daß die Einklappseile (13) sowie die Ausklappseile (14) für beide Spritzgestängeseiten miteinander verbunden sind.

10. Feldspritze nach Anspruch 1, dadurch gekennzeichnet, daß das Ausklappelement von innen nach außen aufbaubar sind während die Einklappelemente von außen nach innen aufbaubar sind.

11. Feldspritze nach Anspruch 8 und 10, dadurch gekennzeichnet, daß beim Einklappen durch das Ausklappseil (14) eine Gegenkraft gegen die Kraft des Einklappseiles (13) aufbringbar ist, und daß beim Ausklappen durch das Einklappseil (13) eine Gegenkraft gegen die Kraft des Ausklappseiles (14) aufbringbar ist.

12. Feldspritze nach Anspruch 10, dadurch gekennzeichnet, daß zwischen den inneren Abschnitten (8,9) des Spritzgestänges (3) die Seile (14) jeweils flaschenzugartig angeordnet sind, während die Seile den äußeren Abschnitten (9,10,11) im wesentlichen über unterschiedliche Hebelarme umgelenkt sind.

13. Feldspritze nach Anspruch 3, dadurch gekennzeichnet, daß in dem Ausklappseil (14) im Bereich der äußeren Abschnitte (10,11) eine Zugfeder (33) angeordnet ist.

**Claims**

1. Agricultural field sprayer, including a spray boom (3), which is divided into at least three sections (8, 9, 10, 11) on each side of extension, said sections being interconnected by means of pivot Joints (4, 5, 6, 7), pivotal axles of which extend vertically, and being capable of being brought into an extended position (operative position) and into a retracted position (travelling position), wherein the individual sections (8, 9, 10, 11) can be brought from their operative position into their travelling position, and vice versa, through the intermediary of a remote control device (12), characterised in that the remote control device is in the form of a cable control means (12), in that each cable (13, 14) of the cable control means (12) is secured only to the outermost section (11) of the spray boom (3) and to a cable pulling member (15, 16), which is disposed on the frame (2) of the field Sprayer, and in that cable guiding members (18, 19, 20, 21, 22, 23, 24, 25, 26, 27, 28, 29, 30, 32, 34, 35, 36, 37) are disposed between the individual sections in the region of the respective pivot Joints (4, 5, 6, 7) and keep the cable (13, 14) at a spacing from the pivotal axle of the pivot joints (4, 5, 6, 7).

2. Field sprayer according to claim 1, characterised in that the pivotal axles of the inner pivot Joints (4), by means of which the innermost sections (8) of the spray boom (3) are pivotally mounted on the frame of the field sprayer, each extend substantially in the direction of travel.

3. Field sprayer according to claim 2, wherein the spray boom is retractable or extensible in a zig-zag-shaped manner, characterised in that two cables (13, 14) are provided for each side of the spray boom (3), the spray boom being retractable by pulling one cable, the retraction cable (13), and the spray boom (3) being extensible by pulling the other cable, the extension cable (14).

4. Field sprayer according to claim 3, characterised in that the two cables are each disposed so that the retraction cable (13) is situated in each case on the side of the respective pivot joint (5, 6, 7), on which side the sections (8, 9, 10, 11) adjacent one another are foldable towards one another, while the extension cable (14) is situated in each case on the other side of the respective pivot joint (8, 9, 10, 11).

5. Field sprayer according to claims 2 and 4, characterised in that, above the pivot Joint (4), which extends substantially in the direction of travel, the innermost section (8) is provided with an arm (17), which protrudes upwardly beyond the pivot joint, and in that the retraction cable (13) is guided through the intermediary of this arm (17).

6. Field sprayer according to claim 1, characterised in that the arrangement for operating the cable control means is in the form of hydraulic cylinders (15, 16).

7. Field sprayer according to claim 1, characterised in that the arrangement for operating the cable control means is in the form of a cable winch.

8. Field sprayer according to claim 3, characterised in that the retraction cables (13) and the extension cables (14) are each operative in opposite directions to one another.

9. Field sprayer according to claim 3, characterised in that the retraction cables (13) and the extension cables (14) for both sides of the spray boom are interconnected.

10. Field sprayer according to claim 1, characterised in that the extension members are assemblable from internally outwardly, while the retraction members are assemblable from externally inwardly.

11. Field sprayer according to claims 8 and 10, characterised in that, during the retraction movement, a counteracting force acting in opposition to the force of the retraction cable (13) can be applied by the extension cable (14), and in that, during the extension movement, a counteracting force acting in opposition to the force of the extension cable (14) can be applied by the retraction cable (13).

12. Field sprayer according to claim 10, characterised in that the cables (14) are each disposed in a pulley-like manner between the inner sections (8,9) of the spray boom (3), while the cables between the outer sections (9, 10, 11) are substantially guided through the intermediary of different lever arms.

13. Field sprayer according to claim 3, characterised in that a tension spring (33) is disposed in the extension cable (14) in the region of the outer sections (10, 11).

**Revendications**

1. Pulvérisateur agricole comportant une rampe de pulvérisation (3) qui est subdivisée de chaque côté en au moins trois segments (8, 9, 10, 11) reliés par des articulations (4, 5, 6) dont les axes de pivotements sont dirigés vers le haut, et peuvent venir soit dans une position déployée (position de travail), soit dans une position repliée (position de transport) et les différents segments (8, 9, 10, 11) peuvent être passés par un dispositif de télécommande (12) de leur position de travail à leur position de transport et inversement, pulvérisateur caractérisé en ce que le dispositif de télécommande est une commande par câble (12) comprenant un câble (12, 14) qui n'est fixé qu'au segment extérieur (11) de la rampe (3) et un élément de traction (15, 16) prévu sur un châssis (2) du pulvérisateur et en ce qu'entre les différents segments au niveau des articulations respectives (4, 5, 6, 7) on a des éléments de guidage de câble (18, 19, 20, 21, 22, 23, 24, 25, 26 27, 28, 29, 30, 32, 34, 35, 36, 37) qui maintiennent le câble (13, 14) à une certaine distance de l'axe de pivotement des articulations (4, 5, 6, 7).

2. Pulvérisateur agricole selon la revendication 1, caractérisé en ce que les axes des articulations intérieures (4) par lesquels les segments les plus à l'intérieur (8) de la rampe (3) sont articulés sur le châssis du pulvérisateur sont orientés sensiblement dans la direction de déplacement.

3. Pulvérisateur agricole selon la revendication 2 dont la rampe se replie ou se déploie en zigzag, pulvérisateur caractérisé en ce que pour chaque côté de la rampe (3), on a deux câbles (13, 14) et en tirant sur l'un des câbles (le câble de reploiement) (13), on replie la rampe et en tirant sur l'autre câble (câble de dépliement ) (14), on déploie la rampe (3).

4. Pulvérisateur agricole selon la revendication 3, caractérisé en ce que les deux câbles sont chaque fois disposés pour que le câble de reploiement (13) se trouve du côté de l'articulation (5, 6, 7) respective vers lequel les segments adjacents (8, 9, 10, 11) viennent l'un contre l'autre alors que le câble de dépliement (14) se trouve chaque fois de l'autre côté de l'articulation respective (9, 10, 11).

5. Pulvérisateur agricole selon les revendications 2 et 4, caractérisé en ce que la partie intérieure (8) présente au-dessus d'une articulation (4) dirigée suivant le sens de déplacement, un bras (17) dépassant par le haut de l'articulation et le câble de reploiement (13) passe sur ce bras (17).

6. Pulvérisateur agricole selon la revendication 1, caractérisé en ce que le dispositif de manoeuvre de la commande par câble est un vérin hydraulique (15, 16).

7. Pulvérisateur agricole selon la revendication 1, caractérisé en ce que le dispositif de manoeuvre de la commande par câble est un treuil.

8. Pulvérisateur agricole selon la revendication 3, caractérisé en ce que les câbles de reploiement (13) et les câbles de dépliement (14) agissent chaque fois de manière antagoniste.

9. Pulvérisateur agricole selon la revendication 3, caractérisé en ce que les câbles de reploiement (13) et les câbles de dépliement (14) des deux côtés de la rampe de pulvérisation sont reliés l'un à l'autre.

10. Pulvérisateur agricole selon la revendication 1, caractérisé en ce que les éléments de dépliement se développent de l'intérieur vers l'extérieur et les éléments de repliement se développent de l'extérieur vers l'intérieur.

11. Pulvérisateur agricole selon les revendications 8 et 10, caractérisé en ce que lors du repliement, le câble de dépliement (14) applique une force s'opposant à la force du câble de reploiement (13), et en ce qu au cours du dépliement , le câble de repliement (13) exerce une force s'opposant à la force du câble de dépliement (14).

12. Pulvérisateur agricole selon la revendication 10, caractérisé en ce que les câbles (14) sont prévus chaque fois à la manière d'un palan entre les segments intérieurs (8, 9) de la rampe (3) alors que les câbles des segments extérieurs (9, 10, 11) passent sur des bras de levier principalement différents.

13. Pulvérisateur agricole selon la revendication 3, caractérisé par un ressort de traction (33) intégré au câble de dépliement (14) dans la zone du segment extérieur (10, 11).

FIG.1

FIG.2

FIG.3

FIG.4